# FASCICULE DE BREVET EUROPEEN

(11) **EP 2 834 470 B1**
(45) Date de publication et mention de la délivrance du brevet: **11.11.2020**
(21) Numéro de dépôt: 13719976.6
(22) Date de dépôt: 03.04.2013
(51) Int. Cl.: F01D 5/14, F01D 5/34

(54) **AUBE DE ROTOR DE TURBOMACHINE, DISQUE D'AUBES MONOBLOC, ROTOR DE COMPRESSEUR ET ROTOR DE SOUFFLANTE ASSOCIÉS**
LAUFSCHAUFEL EINER STRÖMUNGSMASCHINE, ZUGEHÖRIGE BLISK, VERDICHTERROTOR UND FANROTOR
TURBOMACHINE ROTOR BLADE, CORRESPONDING BLISK, COMPRESSOR ROTOR AND FAN ROTOR

(30) Priorité: 04.04.2012 FR 1253108
(43) Date de publication de la demande: 11.02.2015
(73) Titulaire: Safran Aircraft Engines, 75015 Paris (FR)
(72) Inventeur: PERROT, Vincent, Paul, Gabriel, F-77550 Moissy-Cramayel Cedex (FR); COINTE, Julien, F-77550 Moissy-Cramayel Cedex (FR); RIOS, Jean-François, F-77550 Moissy-Cramayel Cedex (FR)
(74) Mandataire: Cabinet Beau de Loménie
(86) Numéro de dépôt international: PCT/FR2013/050735
(87) Numéro de publication internationale: WO 2013/150243

(56) Documents cités:
- EP-A1- 1 333 181
- FR-A1- 2 851 798
- GB-A- 680 036
- US-A- 4 012 172
- US-A- 6 071 077
- US-A1- 2010 054 946
- US-B1- 6 554 564
- KEVIN E. TURNER ET AL: "Airfoil Deflection Characteristics During Rub Events", JOURNAL OF TURBOMACHINERY, vol. 134, no. 1, 31 mai 2011 (2011-05-31), pages 011018-1-011018-8, XP055057872, ISSN: 0889-504X, DOI: 10.1115/1.4003257 cité dans la demande
- ROBIN J. WILLIAMS: "Simulation of blade casing interaction phenomena in gas turbines resulting from heavy tip rubs using an implicit time marching method", PROCEEDINGS OF GT2011 ASME TURBO EXPO 2011: STRUCTURES AND DYNAMICS, JUNE 6-10, 2011, VANCOUVER, BRITISH COLUMBIA, CANADA, vol. 6B, 6 juin 2011 (2011-06-06), - 9 juin 2011 (2011-06-09), pages 1007-1016, XP009168395, New York DOI: 10.1115/GT2011-45495 ISBN: 978-0-7918-5466-2 cité dans la demande
- Jörg Bergner ET AL: "Influence of sweep on the 3D shock structure in an axial transonic compressor", Proceedings of GT2005 ASME Turbo Expo 2005: Power for Land, Sea and Air June 6-9, 2005, Reno-Tahoe, Nevada, USA, 9 juin 2005 (2005-06-09), pages 1-10, XP055057889, Extrait de l'Internet: URL:http://www.triebwerk.info/en/technolog ies/engineering_news/development/Steinhard t_Influence_of_Sweep_en.pdf [extrait le 2013-03-26] cité dans la demande

## Description

La présente invention concerne le domaine des aubes de turbomachine, et plus particulièrement celui des aubes de rotor de turbomachine.

On entend par turbomachine, dans le présent contexte, toute machine dans laquelle peut s'opérer un transfert d'énergie entre un écoulement de fluide et au moins un aubage, comme, par exemple, un compresseur, une pompe, une turbine, ou bien une combinaison d'au moins deux de ceux-ci. Dans la description qui suit, les termes "amont" et "aval" sont définis par rapport au sens de circulation normal du fluide à travers la turbomachine.

Une telle turbomachine peut comprendre plusieurs étages, chaque étage comportant normalement deux aubages, à savoir un aubage mobile et un aubage de redressement. Chaque aubage comporte une pluralité d'aubes décalées les unes des autres en une direction latérale. Typiquement, ces aubes sont arrangées radialement autour d'un axe central A. Ainsi, un tel aubage forme un rotor, quand il s'agit d'un aubage mobile, ou un stator, quand il est un aubage de redressement. L'extrémité proximale de chaque aube par rapport à l'axe central A est normalement dénommée pied d'aube, tandis que l'extrémité distale est normalement dénommée tête d'aube. La distance entre le pied et la tête d'aube est connue comme hauteur d'aube. Entre le pied et la tête d'aube, l'aube est formée par un empilement de profils aérodynamiques sensiblement perpendiculaires à un axe radial Y. On entend par « sensiblement perpendiculaire », dans ce contexte, que le plan de chaque profil peut présenter un angle proche de 90°, par exemple entre 60° et 120°, par rapport à l'axe radial Y.

Dans une turbomachine, un tel rotor est normalement entouré d'un carter. Afin de limiter les pertes d'écoulement dans le rotor, on cherche typiquement à limiter le jeu radial entre les têtes des aubes et les parois intérieures du carter. Toutefois, la diminution de ce jeu radial implique une augmentation du risque de contact des têtes d'aube avec les parois intérieures du carter. Un tel contact peut être particulièrement dangereux si la fréquence de contact entre en résonance avec la fréquence propre des aubes en flexion. Ce problème a donc donné lieu à des études telles que celle présentée par Kevin E. Turner, Michael Dunn et Corso Padova sous le titre « Airfoil Deflection Characteristics During Rub Events » dans la « ASME Turbo Expo 2010 : Power for Land Sea and Air » du 14-18 Juin 2010 à Glasgow, Royaume-Uni, et celle présentée par Robin J. Williams sous le titre « Simulation of Blade Casing Interaction Phenomena in Gas Turbines Resulting from Heavy Tip Rubs Using An Implicit Time Marching Method » dans la « ASME Turbo Expo 2011 » du 6-10 Juin 2011 à Vancouver, Colombie Britannique, Canada.

Simultanément, pour des raisons aérodynamiques, afin d'augmenter le rendement de compresseurs et soufflantes, et en particulier de ceux atteignant des vitesses d'écoulement transsoniques, des aubes en flèche avant ont été proposées, par exemple, dans la demande de brevet américain US 2010/0054946 A1, ainsi que dans l'étude « Influence of Sweep On The 3D Shock Structure In An Axial Transonic Compressor », présentée par Jörg Bergner, Stephan Kablitz, Dietmar K. Hennecke, Harald Passrucker et Erich Steinhardt dans la « ASME Turbo Expo 2005 : Power for Land Sea and Air » du 6-9 Juin 2005 à Reno-Tahoe, Nevada, Etats Unis.

Toutefois, par des raisons géométriques, les aubes en flèche avant peuvent présenter un comportement particulièrement négatif en cas de contact avec le carter. En effet, par leur forme, la déflection latérale provoquée par ce contact peut aggraver le phénomène d'auto-engagement dynamique.

La demande de brevet français FR 2 851 798 A1 divulguait une aube de rotor comportant un segment distal en flèche arrière entre la tête d'aube et un segment intermédiaire présentant une flèche avant sur une partie importante de la hauteur d'aube. La flèche arrière du segment distal dans une telle configuration peut permettre de réduire au moins partiellement le risque d'auto-engagement dynamique.

### Objet et résumé de l'invention

La présente invention vise à encore réduire le risque d'auto-engagement dynamique dans une aube de rotor comportant un segment distal en flèche arrière entre la tête d'aube et un segment intermédiaire présentant une flèche avant sur au moins 50% de la hauteur d'aube.

Dans au moins un mode de réalisation, ce but est atteint grâce au fait que l'aube présente une inclinaison tangentielle positive sur l'ensemble du segment distal, et en particulier une inclinaison tangentielle positive plus prononcée que sur le segment intermédiaire, ce qui contribue, avec la flèche arrière du segment distal, à limiter l'interférence de la tête d'aube avec un carter annulaire proche de celle-ci lors d'une déflection de l'aube en flexion. Par angle d'inclinaison tangentielle, on entend dans le présent contexte l'inclinaison d'une ligne traversant les centres de gravité CG des profils successifs par rapport à un axe radial dans une direction reliant l'aube à l'axe de rotation du rotor. On considère cette inclinaison positive si, en direction de la tête d'aube, l'aube s'incline dans le sens de rotation de l'aube, et négatif si l'aube s'incline dans le sens opposé. Grâce à ces dispositions, il est possible d'obtenir les avantages aérodynamiques des aubes en flèche avant sans compromettre la réponse dynamique des aubes aux contacts avec le carter, permettant ainsi de maintenir un jeu restreint entre les têtes d'aube et le carter et les avantages aérodynamiques découlant de celui-ci. Le segment intermédiaire peut par ailleurs présenter aussi une inclinaison tangentielle positive sur au moins une zone adjacente au segment distal.

En outre, ledit segment distal est directement adjacent à ladite tête d'aube, se prolongeant ainsi jusqu'à la tête d'aube, et libérant une plus grande proportion de la hauteur d'aube pour le segment intermédiaire en flèche avant.

Afin de réduire l'interférence de la tête d'aube avec le carter annulaire, le segment distal peut occuper au moins 5 % et de préférence au moins 8% de la hauteur d'aube.

Toutefois, pour maximiser les avantages aérodynamiques de la flèche avant, le segment distal peut n'occuper pas plus de 30 % et de préférence pas plus de 15 % de la hauteur d'aube.

L'invention concerne également un disque d'aubes monobloc comprenant une pluralité d'aubes avec chacune un segment distal en flèche arrière entre un segment intermédiaire en flèche avant et la tête d'aube. Un tel disque d'aubes monobloc présente les avantages de robustesse et simplicité. Toutefois, alternativement, des aubes suivant l'invention peuvent aussi être des aubes à fixation individuelle, par exemple avec un organe de fixation en pied de sapin sous le pied d'aube.

L'invention concerne également un rotor de compresseur ou de soufflante comportant une pluralité d'aubes avec chacune un segment distal en flèche arrière entre un segment intermédiaire en flèche avant et la tête d'aube.

### Brève description des dessins

L'invention sera bien comprise et ses avantages apparaîtront mieux, à la lecture de la description détaillée qui suit, de deux modes de réalisation représentés à titre d'exemples non limitatifs. La description se réfère aux dessins annexés sur lesquels :
- la figure 1 est une coupe longitudinale schématique d'une turbomachine ;
- la figure 2A est une vue schématique en perspective d'un rotor de turbomachine ;
- la figure 2B est une vue schématique en perspective d'un détail du rotor de la figure 2A ;
- la figure 2C est une vue en coupe transversale d'une des aubes du rotor de la figure 2A dans le plan IIC-IIC ;
- la figure 3A illustre une aube de rotor présentant une flèche avant ;
- la figure 3B illustre une aube de rotor présentant une flèche arrière ;
- la figure 3C illustre une aube de rotor présentant un angle d'inclinaison tangentielle négatif ;
- la figure 3D illustre une aube de rotor présentant un angle d'inclinaison tangentielle positif ;
- la figure 4 illustre schématiquement la vibration d'une aube en flexion suite à un contact avec le carter ;
- la figure 5 est une vue en perspective d'une aube de turbomachine suivant un premier mode de réalisation de l'invention ;
- la figure 6A est un diagramme illustrant l'évolution, entre le pied et la tête d'aube, de la flèche de l'aube de la figure 5;
- la figure 6B est un diagramme illustrant l'évolution, entre le pied et la tête d'aube, de l'inclinaison tangentielle de l'aube de la figure 5;
- la figure 7A est un diagramme illustrant l'évolution, entre le pied et la tête d'aube, de la flèche d'une aube suivant un deuxième mode de réalisation ; et
- la figure 7B est un diagramme illustrant l'évolution, entre le pied et la tête d'aube, de l'inclinaison tangentielle de l'aube du deuxième mode de réalisation.

### Description détaillée de l'invention

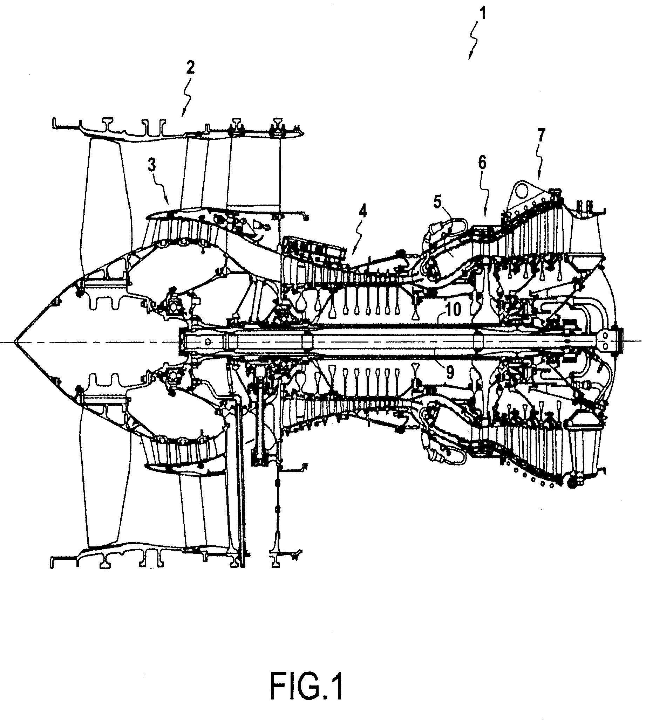

La figure 1 montre un exemple illustratif de turbomachine, plus spécifiquement un turboréacteur axial 1 à double flux. Le turboréacteur 1 illustré comporte une soufflante 2, un compresseur basse pression 3, un compresseur haute pression 4, une chambre de combustion 5, une turbine haute pression 6, et une turbine basse pression 7. La soufflante 2 et le compresseur basse pression 3 sont reliés à la turbine basse pression 7 par un premier arbre de transmission 9, tandis que le compresseur haute pression 4 et la turbine haute pression 6 sont reliés par un deuxième arbre de transmission 10. En fonctionnement, un écoulement d'air comprimé par les compresseurs basse et haute pression 3 et 4 alimente une combustion dans la chambre de combustion 5, dont l'expansion des gaz de combustion entraîne les turbines haute et basse pression 6, 7. A travers les arbres 9 et 10, les turbines 6, 7 actionnent ainsi la soufflante 2 et les compresseurs 3,4. L'air propulsé par la soufflante 2 et les gaz de combustion sortant du turboréacteur 1 à travers une tuyère propulsive (non illustrée) en aval des turbines 6, 7 exercent une poussée de réaction sur le turboréacteur 1 et, à travers lui, sur un véhicule ou engin tel qu'un aéroplane (non illustré).

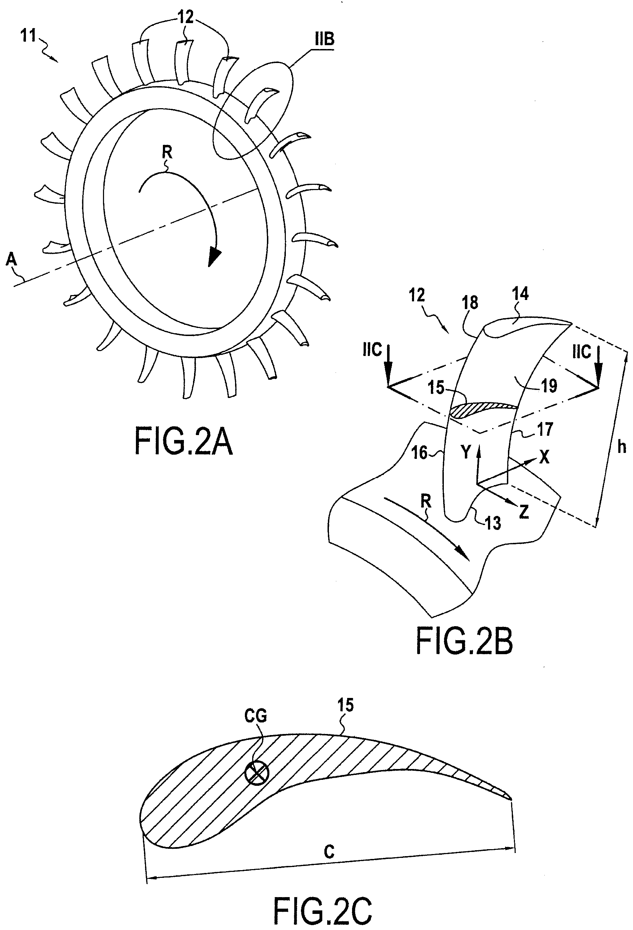

Chaque compresseur 3,4 et chaque turbine 6,7 du turboréacteur 1 comportent plusieurs étages, chaque étage étant formé par un aubage fixe ou stator, et un aubage tournant ou rotor. Un rotor 11 de compresseur axial est illustré schématiquement sur la figure 2A. Ce rotor 11 comporte une pluralité d'aubes 12 arrangées radialement autour de l'axe de rotation A du rotor 11, qui est sensiblement parallèle à la direction générale d'écoulement du fluide de travail à travers le turboréacteur 1. Les aubes 12 peuvent être intégrées en une seule pièce au rotor 11, formant ainsi un disque d'aubes monobloc, ou bien elles peuvent être formées séparément et jointes au rotor par des moyens de fixation généralement connus dans l'état de la technique, tels que des fixations en pied de sapin.

Comme illustré en plus grand détail sur la figure 2B, chaque aube 12 présente un système de référence spatial avec trois axes orthogonaux X, Y et Z. L'axe X est parallèle à l'axe de rotation A du rotor 11, l'axe Z est tangentiel à la direction de rotation R de l'aube 12 autour de l'axe de rotation A, et l'axe Y est un axe radial suivant une direction traversant l'axe de rotation A. Chaque aube 12 comporte un pied d'aube 13 et une tête d'aube 14 séparés par une hauteur d'aube h suivant la direction de l'axe radial Y. Entre le pied d'aube 13 et la tête d'aube 14, l'aube 12 comporte un empilement de profils aérodynamiques 15 dans des plans perpendiculaires à l'axe radial Y, formant un bord d'attaque 16 en direction amont, un bord de fuite 17 en direction aval, un extrados 18 et un intrados 19. Dans un rotor de compresseur ou de soufflante, le sens de rotation R en fonctionnement normal est tel que chaque aube 12 se déplace en direction de son intrados 19.

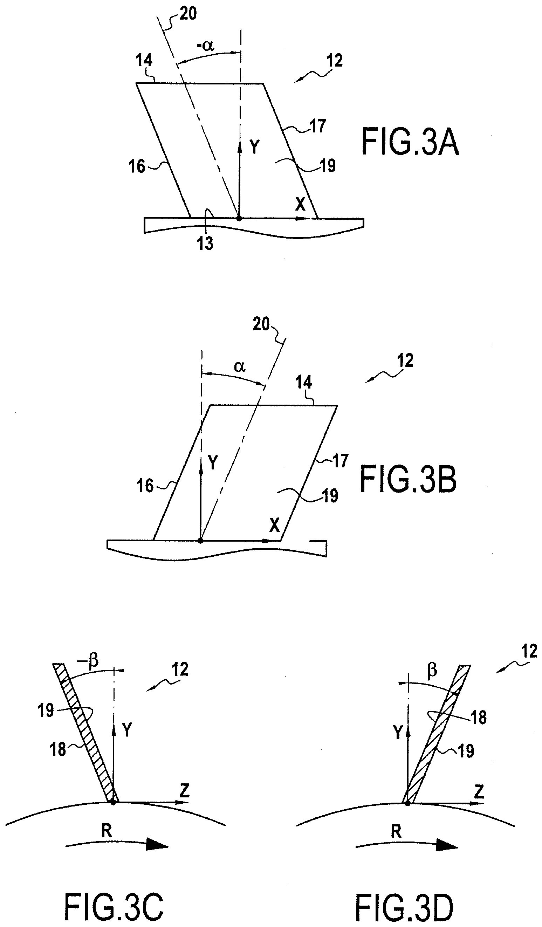

Un tel profil 15 de l'aube 12 est illustré sur la figure 2C. Chaque profil 15 présente une corde C entre le bord d'attaque 16 et le bord de fuite 17 et un centre de gravité CG défini comme le barycentre géométrique du profil 15. Dans le domaine des aubes de turbomachine, l'inclinaison de la ligne traversant les centres de gravité CG des profils 15 successifs par rapport à l'axe radial Y est utilisée pour définir la flèche et l'inclinaison tangentielle d'une aube 12. Ainsi, quand en direction de la tête d'aube 14 cette ligne 20 présente une inclinaison -a en direction amont dans le plan XY, comme illustré sur la figure 3A, l'aube 12 présente une flèche avant. Par contre, quand cette ligne 20 présente une inclinaison α en direction aval sur le même plan, comme illustré sur la figure 3B, l'aube 12 présente une flèche arrière. De manière similaire, l'inclinaison tangentielle est définie par l'inclinaison de cette ligne 20 par rapport à l'axe radial Y dans le plan ZY. Ainsi, quand en direction de la tête d'aube 14 la ligne 20 est inclinée vers l'extrados 18 (et donc en sens opposé au sens de rotation R du rotor), l'aube 12 présente une inclinaison tangentielle -β négative comme illustré sur la figure 3C. Par contre, quand cette inclinaison est en direction de l'intrados 19 (et donc dans le sens de rotation R du rotor), l'aube 12 présente une inclinaison tangentielle β positive, comme illustré sur la figure 3D. A part la flèche et l'inclinaison tangentielle, les aubes de turbomachines présentent généralement des géométries complexes avec des profils 15 dont l'angle d'attaque, la cambrure, l'épaisseur et la corde C peuvent aussi varier le long de l'axe Y.

Dans l'état de la technique, et notamment pour les aubes de rotor de compresseurs et soufflantes, il s'est révélé qu'une configuration en flèche avant présente des avantages aérodynamiques, en particulier dans un domaine de fonctionnement transsonique. Toutefois, une telle configuration peut aussi présenter des inconvénients mécaniques, notamment en cas de contact de la tête d'aube avec un carter entourant le rotor. Comme on peut voir sur la figure 1, généralement le jeu disponible entre les têtes d'aubes des rotors de la soufflante 2 et des compresseurs 3, 4 et les carters de soufflante et compresseurs, respectivement, est très limité. En effet, ce jeu provoque des pertes aérodynamiques au niveau des têtes d'aube causant des pertes sensibles de rendement global de la turbomachine. Il convient donc de le réduire, ce qui, par contre, augmente la probabilité de contacts entre les têtes d'aube et le carter dus à des vibrations ou à des déformations dans la turbomachine. Un tel contact provoque un effort transitoire de l'aube en flexion et, même si le carter présente une zone d'usure pour réduire cet effort, un contact périodique avec une fréquence proche d'une fréquence propre de l'aube en flexion, peut entraîner une résonance et même, éventuellement, la rupture de l'aube.

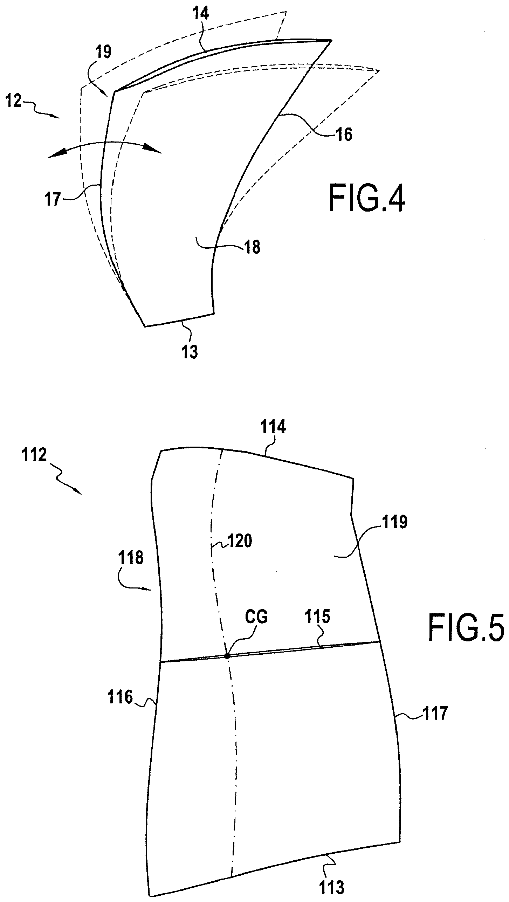

Ce phénomène est plus prononcé sur des aubes en flèche avant, car avec cette géométrie la déflection de l'aube après un premier contact risque d'aggraver les contacts subséquents. Cette déflection d'une aube 12 à flèche avant dans un premier mode vibratoire en flexion est illustrée schématiquement sur la figure 4, où l'on peut apprécier comment le décalage en direction amont de la tête d'aube 14 par rapport au pied d'aube 13 peut aggraver le contact de la tête d'aube 14 avec un carter quand l'aube 12 entre en vibration.

La figure 5 montre une aube 112 suivant un premier mode de réalisation de l'invention et permettant de pallier cet inconvénient des aubes en flèche avant. Cette aube 112 comporte aussi un pied d'aube 113, une tête d'aube 114, un bord d'attaque 116, un bord de fuite 117, un intrados 118 et un extrados 119 et est aussi formée par un empilement de profils aérodynamiques 115 sur la hauteur d'aube h entre le pied d'aube 113 et la tête d'aube 114. Cette aube 112 présente toutefois, entre un segment intermédiaire 112a en flèche avant occupant environ 65% de la hauteur d'aube h et la tête d'aube 114, un segment distal 112b en flèche arrière occupant environ 10% de la hauteur d'aube h. Cette flèche arrière du segment distal 112b réduit donc le décalage de la tête d'aube 114 en direction amont par rapport au pied d'aube 113. En outre, dans ce premier mode de réalisation, le segment distal 112b présente aussi une inclinaison tangentielle positive sensiblement plus prononcée que le segment intermédiaire 112a.

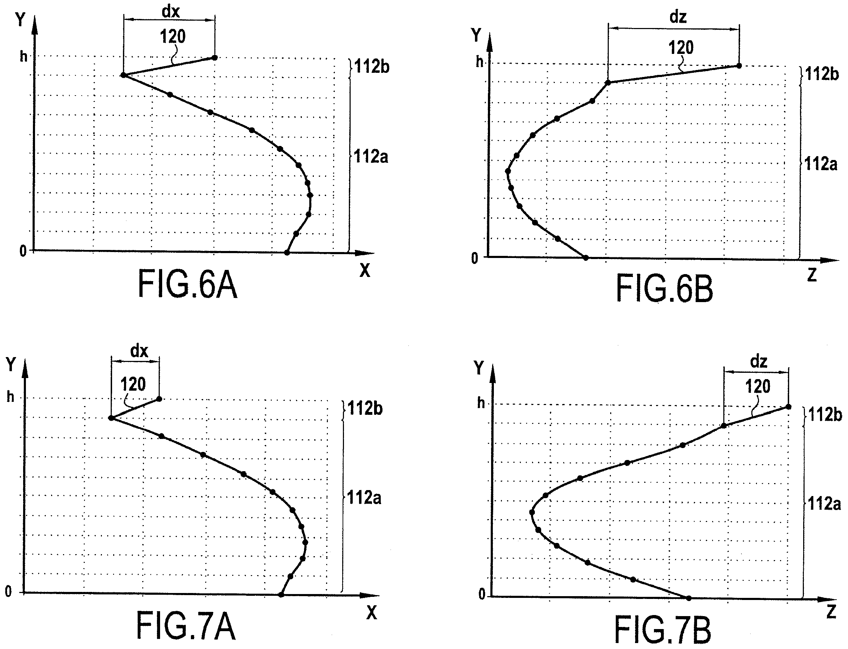

La figure 6A illustre la projection sur un plan XY de la ligne 120 reliant les centres de gravité CG des profils 115 de cette aube 112. Afin de mieux distinguer l'évolution de la ligne 120, les distances dans l'axe X sont exagérées par rapport à l'axe Y. On peut ainsi apprécier comment l'aube présente une flèche avant sur un segment intermédiaire 112a occupant environ 65 % de la hauteur d'aube h, suivie d'une flèche arrière sur le segment distal 112b situé entre le segment intermédiaire 112a et la tête d'aube 114. Ainsi, dans ce segment distal 112b, la ligne 120 recule d'une distance dx sur l'axe X d'environ 1,75 % la hauteur d'aube h, réduisant ainsi le décalage de la tête d'aube 114 en direction amont, et donc le risque d'auto-engagement dynamique de l'aube 112 suite à un premier contact avec un carter.

La figure 6B illustre la projection de la même ligne 120 sur un plan ZY, montrant ainsi l'inclinaison tangentielle positive β sensiblement plus prononcée sur le segment distal 112b que sur le segment intermédiaire 112a. Afin de mieux distinguer l'évolution de la ligne 120, les distances dans l'axe Z sont aussi exagérées par rapport à l'axe Y. En conséquence de cette inclinaison tangentielle positive plus prononcée, la ligne 120 avance en direction de l'intrados d'une distance dz sur l'axe Z d'environ 4 % de la hauteur d'aube h, contribuant aussi de cette manière à réduire le risque d'auto-engagement dynamique de l'aube 112.

Toutefois, dans d'autres modes de réalisation, l'inclinaison tangentielle positive sur le segment distal peut ne pas être plus prononcée que sur au moins une zone du segment intermédiaire adjacente au segment distal. Ainsi, les figures 7A et 7B illustrent de la même manière les projections sur, respectivement, les plans XY et ZY, d'une ligne 120 reliant les centres de gravité des profils d'une aube suivant un deuxième mode de réalisation. Comme dans le premier mode de réalisation, cette aube présente une flèche avant sur un segment intermédiaire 112a occupant environ 65 % de la hauteur d'aube h, suivie d'une flèche arrière sur le segment distal 112b situé entre le segment intermédiaire 112a et la tête d'aube. Ainsi, comme illustré sur la figure 7A, dans le segment distal 112b, la ligne 120 recule d'une distance dx sur l'axe X d'environ 1,25 % la hauteur d'aube h, réduisant ainsi le décalage de la tête d'aube en direction amont, et donc le risque d'auto-engagement dynamique de l'aube suite à un premier contact avec un carter. Toutefois, comme illustré sur la figure 7B, dans ce mode de réalisation l'inclinaison tangentielle positive β n'est pas sensiblement plus prononcée sur le segment distal 112b que sur une zone adjacente du segment intermédiaire 112a.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par exemple, suivant des différents modes de réalisation, la flèche arrière du segment distal peut faire reculer sur l'axe X le centre de masse des profils d'aube jusqu'à une distance de 5 % de la hauteur d'aube suivant les différents modes de réalisation. Le déport des profils d'aube dans l'axe Z par l'inclinaison tangentielle positive du segment distal peut aussi atteindre jusqu'à 7 % de la hauteur d'aube suivant les différents modes de réalisation. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Aube (112) de rotor de turbomachine comportant un pied d'aube (113) et une tête d'aube (114) séparées par une hauteur d'aube (h), ainsi qu'au moins un segment intermédiaire (112a), entre le pied d'aube (113) et la tête d'aube (114), présentant une flèche avant sur au moins 50 % de ladite hauteur d'aube (h), et un segment distal (112b) en flèche arrière entre le segment intermédiaire (112a) et la tête d'aube (114), **caractérisée en ce que** l'aube (112) présente une inclinaison tangentielle positive sur l'ensemble du segment distal (112b), qui est directement adjacent à ladite tête d'aube.

2. Aube (112) de rotor de turbomachine suivant la revendication 1, dans laquelle ledit segment distal (112b) présente une inclinaison tangentielle positive plus prononcée que le segment intermédiaire (112a).

3. Aube (112) de rotor de turbomachine suivant l'une quelconque des revendications précédentes, dans laquelle ledit segment intermédiaire (112a) présente aussi une inclinaison tangentielle positive sur au moins une zone adjacente au segment distal (112b).

4. Aube (112) de rotor de turbomachine suivant l'une quelconque des revendications précédentes, dans laquelle ledit segment distal (112b) occupe au moins 5 % de la hauteur d'aube (h).

5. Aube (112) de rotor de turbomachine suivant la revendication 4, dans laquelle ledit segment distal (112b) occupe au moins 8 % de la hauteur d'aube (h).

6. Aube (112) de rotor de turbomachine suivant l'une quelconque des revendications précédentes, dans laquelle ledit segment distal (112b) n'occupe pas plus de 30 % de la hauteur d'aube h.

7. Aube (112) de rotor de turbomachine suivant la revendication 6, dans laquelle ledit segment distal (112b) n'occupe pas plus de 15% de la hauteur d'aube (h).

8. Disque d'aubes monobloc comportant une pluralité d'aubes (112) suivant l'une quelconque des revendications 1 à 7.

9. Rotor de compresseur comportant une pluralité d'aubes (112) suivant l'une quelconque des revendications 1 à 7.

10. Rotor de soufflante comportant une pluralité d'aubes (112) suivant l'une quelconque des revendications 1 à 7.

## Patentansprüche

1. Rotorschaufel (112) einer Turbomaschine, die einen Schaufelfuß (113) und einen Schaufelkopf (114), die durch eine Schaufelhöhe (h) getrennt sind, sowie mindestens ein Zwischensegment (112a) zwischen dem Schaufelfuß (113) und dem Schaufelkopf (114), das eine Vorwärtspfeilung an mindestens 50 % der Schaufelhöhe (h) aufweist, und ein distales Segment (112b) in Rückwärtspfeilung zwischen dem Zwischensegment (112a) und dem Schaufelkopf (114) beinhaltet, **dadurch gekennzeichnet, dass** die Schaufel (112) eine tangentiale positive Neigung an dem gesamten distalen Segment (112b) aufweist, das sich direkt benachbart zu dem Schaufelkopf befindet.

2. Rotorschaufel (112) einer Turbomaschine nach Anspruch 1, wobei das distale Segment (112b) eine tangentiale positive Neigung aufweist, die ausgeprägter als das Zwischensegment (112a) ist.

3. Rotorschaufel (112) einer Turbomaschine nach einem der vorhergehenden Ansprüche, wobei das Zwischensegment (112a) auch eine tangentiale positive Neigung an mindestens einem benachbarten Bereich zu dem distalen Segment (112b) aufweist.

4. Rotorschaufel (112) einer Turbomaschine nach einem der vorhergehenden Ansprüche, wobei das distale Segment (112b) mindestens 5 % der Schaufelhöhe (h) belegt.

5. Rotorschaufel (112) einer Turbomaschine nach Anspruch 4, wobei das distale Segment (112b) mindestens 8 % der Schaufelhöhe (h) belegt.

6. Rotorschaufel (112) einer Turbomaschine nach einem der vorhergehenden Ansprüche, wobei das distale Segment (112b) nicht mehr als 30 % der Schaufelhöhe h belegt.

7. Rotorschaufel (112) einer Turbomaschine nach Anspruch 6, wobei das distale Segment (112b) nicht mehr als 15 % der Schaufelhöhe (h) belegt.

8. Einstückige Schaufelscheibe, die mehrere Schaufeln (112) nach einem der Ansprüche 1 bis 7 beinhaltet.

9. Verdichterrotor, der mehrere Schaufeln (112) nach einem der Ansprüche 1 bis 7 beinhaltet.

10. Gebläserotor, der mehrere Schaufeln (112) nach einem der Ansprüche 1 bis 7 beinhaltet.

## Claims

1. A turbomachine rotor blade (112) comprising a blade root (113) and a blade tip (114) spaced apart by a blade height (h), with at least one intermediate segment (112a) between the blade root (113) and the blade tip (114) that presents forward sweep over at least 50% of said blade height (h), and with a distal segment (112b) with backward sweep between the intermediate segment (112a) and the blade tip (114), **characterized in that** the blade (112) presents a positive tangential angle of inclination over the whole distal segment (112b), which is directly adjacent to said blade tip.

2. A turbomachine rotor blade (112) according to claim 1, wherein said distal segment (112b) presents a positive tangential angle of inclination that is more pronounced than that of the intermediate segment (112a).

3. A turbomachine rotor blade (112) according to either preceding claim, wherein said intermediate segment (112a) also presents a positive tangential angle of inclination over at least one zone adjacent to the distal segment (112b).

4. A turbomachine rotor blade (112) according to any preceding claim, wherein said distal segment (112b) occupies at least 5% of the blade height (h).

5. A turbomachine rotor blade (112) according to claim 4, wherein said distal segment (112b) occupies at least 8% of the blade height (h).

6. A turbomachine rotor blade (112) according to any preceding claim, wherein said distal segment (112b) occupies no more than 30% of the blade height (h).

7. A turbomachine rotor blade (112) according to claim 6, wherein said distal segment (112b) occupies no more than 15% of the blade height (h).

8. A single-piece bladed disk having a plurality of blades (112) according to any one of claims 1 to 7.

9. A compressor rotor having a plurality of blades (112) according to any one of claims 1 to 7.

10. A fan rotor including a plurality of blades (112) according to any one of claims 1 to 7.
